# EUROPEAN PATENT APPLICATION

(11) **EP 4 807 890 A1**
(43) Date of publication of application: **16.09.2026**
(21) Application number: 25759042.2
(22) Date of filing: 23.01.2025
(51) Int. Cl.: H01M 50/572

(54) **BATTERY DEVICE, ENERGY STORAGE DEVICE, ENERGY STORAGE SYSTEM, ELECTRIC DEVICE, AND CHARGING NETWORK**

(71) Applicant: Contemporary Amperex Technology (Hong Kong) Limited, Central (HK)
(72) Inventor: QIAN, Ou, Ningde, Fujian 352100 (CN); LI, Yao, Ningde, Fujian 352100 (CN); JIANG, Shixin, Ningde, Fujian 352100 (CN); ZHENG, Linxin, Ningde, Fujian 352100 (CN)
(74) Representative: Gong, Jinping
(86) International application number: PCT/CN2025/074331
(87) International publication number: WO 2026/156599

(57) **Abstract**

A battery device (100), an energy storage device (1), an energy storage system, an electric device, and a charging network are disclosed. A parallel unit (20) of the battery device (100) includes a plurality of pouch battery cells (21) connected in parallel, a parallel circuit is provided between at least two pouch battery cells (21), one thermally conductive housing (10) correspondingly accommodates the plurality of pouch battery cells (21) in one parallel unit (20), a series unit (30) includes the pouch battery cells (21) connected in series to form the series circuit and separately located in a plurality of parallel units (20), and a current limiter (40) is provided in any of the parallel circuits and is located outside the series circuit to limit the current in the corresponding parallel circuit (20).

## Description

### TECHNICAL FIELD

The present application relates to the field of batteries, and in particular to a battery device, an energy storage device, an energy storage system, an electric device, and a charging network.

### BACKGROUND

In the design of a soft-pack battery, a battery system is often designed with a plurality of soft-pack batteries connected in parallel due to a small capacity of the soft-pack battery itself and the upper voltage limit of the battery system.

When an internal short circuit occurs in a soft-pack battery, the voltage of the soft-pack battery may drop, and a number of soft-pack batteries that are connected in parallel may discharge electricity to the soft-pack battery experiencing the short circuit, causing an increase in the temperature of the soft-pack battery experiencing the internal short circuit, and thus possibly causing the risk of runaway in the battery.

When a single soft-pack battery experiences thermal runaway, the internal active material becomes a resistive conductor, and electric discharge from the soft-pack batteries connected in parallel to the soft-pack battery experiencing thermal runaway may result in an increased local temperature in the soft-pack battery, thus bringing about potential safety hazards to the entire battery system.

### SUMMARY

In view of the above problem, the present application provides a battery device, an energy storage device, an energy storage system, an electric device, and a charging network, to solve or alleviate the problem of the local excessive temperature in the battery device in thermal runaway.

In a first aspect, the present application provides a battery device, including:
a plurality of thermally conductive housings;
a plurality of parallel units, where the parallel unit includes a plurality of pouch battery cells connected in parallel, and one thermally conductive housing correspondingly accommodates the plurality of pouch battery cells in one parallel unit;
a parallel circuit is provided between at least two pouch battery cells of the parallel unit;
a series unit, where the series unit includes the pouch battery cells connected in series and separately located in the plurality of parallel units, and a circuit between two pouch battery cells of different parallel units that are connected in series is a series circuit; and
a plurality of current limiters, where any of the parallel circuits is provided with the current limiter, and the current limiter is positioned outside the series circuit and configured for limiting the current in the corresponding parallel circuit.

In the technical solution of the embodiments of the present application, the battery device discharges electricity through the series circuit during normal operation, but in the case of the short circuit or thermal runaway in a pouch battery cell, the other pouch battery cells may discharge electricity to the pouch battery cell experiencing the short circuit or thermal runaway through the current limiters, which limit the currents in corresponding parallel circuits to prevent local excessive temperatures in the pouch battery cell in thermal runaway.

In some embodiments, the thermally conductive housing is provided with at least one open end surface, the battery device includes a cold plate, the open end surface faces toward the cold plate, and the thermally conductive housing is connected to the cold plate or the pouch battery cells are connected to the cold plate for heat dissipation.

In the above technical solution, during the operational discharge, the pouch battery cell generates heat and transfers the heat to the thermally conductive housing. The thermally conductive housing is provided with the open end surface, and the cold plate may be in contact with the pouch battery cells or the open end surface of the thermally conductive housing, such that the cold plate absorbs and dissipates the heat generated by the pouch battery cells, so as to maintain the operating temperature of the battery device at a temperature suitable for operation.

In some embodiments, a gap is provided between the side of the pouch battery cells proximal to the open end surface and the cold plate, and the gap is filled with a thermally conductive adhesive.

In the above technical solution, an accommodating space is formed in the thermally conductive housing for accommodating the pouch battery cells. The thermally conductive housing is fixedly connected to the cold plate, the gap is provided on the side of the pouch battery cells proximal to the open end surface and is filled with thermally conductive adhesive, and the heat is transferred from the pouch battery cells to the cold plate through the thermally conductive adhesive, so as to allows improved heat dissipation from the pouch battery cells.

In some embodiments, an end part of the open end surface is provided with a limiting part, and the limiting part protrudes towards the interior of the thermally conductive housing and is arranged between the pouch battery cells and the open end surface.

In the above technical solution, the end part of the open end surface is provided with the limiting part, and the limiting part is located between the pouch battery cells and the open end surface and is configured for limiting the positions of the pouch battery cells, so as to prevent the pouch battery cells from falling out of the open end surface during the movement and assembly of the battery device.

In some embodiments, the thermally conductive housing includes two of the open end surfaces, the two open end surfaces are both provided with the limiting part, the gap is provided between the side of the pouch battery cells proximal to the open end surfaces and the cold plate and is filled with the thermally conductive adhesive, and the thermally conductive adhesive is at least partially located between the two limiting parts so as to thermo-conductively connect the pouch battery cells on one side of the limiting parts to the cold plate on the other side of the limiting parts.

In the above technical solution, the accommodating space for the pouch battery cells formed in the thermally conductive housing is in communication with the exterior through an opening between two open end surfaces, and the pouch battery cells enter the accommodating space through the opening between the two open end surfaces. At least a part of the thermally conductive adhesive is applied between the limiting parts of the two open end surfaces so as to thermo-conductively connect the pouch battery cells and the cold plate located on the two sides of the limiting parts. As such, the pouch battery cells are in direct contact with the thermally conductive housing, and are thermo-conductively connected to the cold plate through the thermally conductive adhesive, such that the thermally conductive housing and the cold plate may have an improved heat dissipation effect on the pouch battery cells.

In some embodiments, the pouch battery cell includes an electrode lead, the battery device includes a first connection member, the first connection member is connected to the electrode leads of the pouch battery cells in different parallel units to form the series circuit, and the current limiter is connected to the electrode leads of different pouch battery cells in the same parallel unit to form the parallel circuit.

In the above technical solution, the electrode lead is configured for the electrical connection between the pouch battery cells and the first connection member and the current limiter. The first connection member is connected to the electrode leads of the pouch battery cells in different parallel units to form the series circuit. The current limiter is connected to the electrode leads of different pouch battery cells in the same parallel unit to form the parallel circuit. As such, the plurality of pouch battery cells form a plurality of parallel units and series units. As such, the battery device outputs electrical energy in the normal operation through the series circuit formed by the first connection member, and in the case of the short circuit or thermal runaway in a certain pouch battery cell, the other pouch battery cells may discharge electricity to the pouch battery cell experiencing the short circuit or thermal runaway through the current limiters, which limit the currents in the parallel circuits to prevent local excessive temperatures in the pouch battery cell in thermal runaway.

In some embodiments, the resistance of the current limiter is greater than that of the first connection member.

In the above technical solution, the resistance of the current limiter is greater than that of the first connection member, such that in the normal operation of the battery device, the current first passes through the first connection member, and no current passes through the current limiter. As such, the current limiter has no effect on the battery device when the battery device is in normal operation.

In some embodiments, the first connection member and the current limiter are each of an electrically conductive material, and an insulating layer is provided between the current limiter and the first connection member.

In the above technical solution, both the first connection member and the current limiter are connected to the electrode leads of the pouch battery cells, and due to the small space in the end part of the pouch battery cells, the insulating layer provided between the first connection member and the current limiter can avoid the direct connectivity between the first connection member and the current limiter, thus allowing the battery device to generate heat and consume energy during normal operation due to the current passing through the current limiter.

In some embodiments, on the same pouch battery cell, the first connection member and the current limiter are separately connected to different locations on the same side surface of the electrode lead, or the first connection member and the current limiter are separately connected to different side surfaces of the electrode lead.

In the above technical solution, the first connection member and the current limiter are separately connected to the electrode lead of the same pouch battery cell, and the first connection member and the current limiter are spatially isolated from each other and thus located at different positions on the same side surface of the electrode lead or connected to different side surfaces of the electrode lead, so as to avoid the direct connectivity between the first connection member and the current limiter.

In some embodiments, the resistance of the current limiter is greater than or equal to 0.2 Ω (ohms), or the current limiter is configured for limiting the current in the parallel circuit to less than or equal to 20 A (amperes).

In the above technical solution, the current limiter is configured for limiting the current in any of the parallel circuits to 20 A or less. As such, by configuring the current limiter with a resistance of greater than or equal to 0.2 Ω and limiting the current in the parallel circuit to 20 A or less, the local excessive temperature of the battery device due to the excessive current in the parallel circuit can be avoided in the event of a short circuit or thermal runaway in the pouch battery cell.

In some embodiments, the range of the resistance of the current limiter is [0.2 Ω, 1000 Ω].

In the above technical solution, limiting the resistance of the current limiter in a range of [0.2 Ω, 1000 Ω] can limit the current in the parallel circuit to 20 A or less. However, an excessive resistance of the current limiter may cause severe overheating in the current limiter. Configuring the resistance of the current limiter in a suitable range allows a better control of the current in the parallel circuit and the heat generation of the current limiter, thus avoiding the local excessive temperature of the battery device due to the excessive current in the parallel circuit in the event of a short circuit or thermal runaway of the pouch battery cell.

In some embodiments, the pouch battery cell includes a body part and an electrode lead, the body parts of the plurality of the pouch battery cells in the same thermally conductive housing are arranged in a row in a first direction, and the current limiter is located on one side of the body part in a second direction; the first direction and the second direction are perpendicular to each other.

In the above technical solution, the body parts of the pouch battery cells are arranged in a row in the first direction, and the current limiter is located on one side of the body part in the second direction, that is, both a plurality of body parts and a plurality of current limiters are arranged in the first direction. Such configuration can avoid sandwiching the current limiter between two body parts and thus the breakage of the pouch battery cells caused by compressing the pouch battery cells.

In some embodiments, the pouch battery cell includes an outer flexible shell and an electrode assembly; the electrode assembly comprises an electrode plate part and a tab part, and the current limiter is misaligned with the electrode plate part in the first direction.

In the above technical solution, the pouch battery cell includes the outer flexible shell and the electrode assembly, where the outer flexible shell is configured for accommodating the electrode assembly. The misalignment of the current limiter to the electrode plate part in the first direction prevents the current limiter from compressing the electrode plate part and thereby prevents the poor contact at the electrode plate part and thus lithium deintercalation. Lithium deintercalation may lead to an increase in the internal temperature of the battery and thus an increase in the internal resistance of the battery and thereby affect the capacity and discharge performance of the battery device.

In some embodiments, the pouch battery cell is any one of a lithium iron phosphate battery cell, a ternary battery cell, and a solid-state battery cell.

In the above embodiments, in the embodiments of the present application in which the pouch battery cell is configured into a lithium iron phosphate battery cell, the reliability of the pouch battery cell may be improved, and the cycle life of the pouch battery cell may be prolonged. In the embodiments of the present application in which the pouch battery cell is configured into a ternary lithium battery cell, the energy density of the pouch battery cell may be improved, and the endurance mileage may be extended. In the embodiments of the present application in which the pouch battery cell is configured into a solid-state pouch battery cell, both the energy density and the reliability may be increased.

In a second aspect, the present application provides an energy storage device, including a plurality of battery devices according to any one of the above embodiments, where the battery device is configured for storing or providing electrical energy.

In a third aspect, the present application provides an energy storage system, including a power converter system and the energy storage device according to the above embodiment, where the power converter system is configured for electrically connecting a power generation device to the energy storage device.

In a fourth aspect, the present application provides an electric device, including: the battery device according to any one of the above embodiments, and the energy storage device according to the above embodiment or the energy storage system according to the above embodiment, where the battery device, the energy storage device, or the energy storage system is configured for providing electrical energy to the electric device.

In a fifth aspect, the present application provides an electric device, including a charging pile and the energy storage device according to the above embodiment or the energy storage system according to the above embodiment, where the energy storage device or the energy storage system is configured for providing electrical energy to the charging pile.

The above descriptions are merely a summary of the technical solutions of the present application. To make the technical means of the present application more clearly understood and implemented according to the contents of the specification, and to make the above and other objectives, features, and advantages of the present application more apparent and comprehensible, specific implementations of the present application are described in detail below.

### BRIEF DESCRIPTION OF THE DRAWINGS

FIG. 1 is a structural schematic view of an energy storage system according to some embodiments of the present application;
FIG. 2 is a structural schematic view of a charging network according to some embodiments of the present application;
FIG. 3 is a structural schematic view of a vehicle according to some embodiments of the present application;
FIG. 4 is an exploded structural schematic view of a battery device according to some embodiments of the present application;
FIG. 5 is a structural schematic view of a battery device according to some embodiments of the present application;
FIG. 6 is another structural schematic view of a battery device according to some embodiments of the present application;
FIG. 7 is another exploded structural schematic view of a battery device according to some embodiments of the present application; and
FIG. 8 is yet another structural schematic view of a battery device according to some embodiments of the present application.

Reference numerals in the detailed description are as follows:
vehicle 1000;
battery device 100, controller 200, motor 300;
thermally conductive housing 10, open end surface 11, limiting part 111,
parallel unit 20, pouch battery cell 21, body part 212;
series unit 30;
current limiter 40;
cold plate 50, thermally conductive adhesive 51;
first connection member 60;
case 70, first part 71, second part 72;
energy storage device 1, power converter system 2, power generation apparatus 3, charging pile 4, connector 5.

### DETAILED DESCRIPTION

Embodiments of the technical solutions of the present application will be described in detail below with reference to the drawings. The following embodiments are only for illustrating the technical solutions of the present application more clearly, and therefore are only exemplary and do not limit the claimed scope of the present application.

Unless otherwise defined, all technical and scientific terms used herein have the same meaning as commonly understood by those skilled in the technical field to which the present application belongs. The terms used herein are only for illustrating the specific embodiments, rather than limiting the present application. The terms "include", "comprise" and "provided with", and any variations thereof in the specification and claims of the present application and the above-mentioned drawing description encompass non-exclusive inclusions.

Unless otherwise specified, all embodiments and optional embodiments of the present application can be combined with one another to form new technical solutions.

Unless otherwise specified, all technical features and optional technical features of the present application can be combined with one another to form new technical solutions.

In the description of the embodiments of the present application, technical terms such as "first", "second", and the like are only used to distinguish different objects and should not be interpreted as indicating or implying the relative importance or implicitly indicating the number, specific order, or primary and secondary relationship of the noted technical features. In the description of the embodiments of the present application, unless otherwise specifically defined, "plurality of" means two or more.

Reference in the present application to "embodiment" means that a particular feature, structure, or characteristic described in combination with the embodiment can be included in at least one embodiment of the present application. The references of the word in the context of the specification do not necessarily refer to the same embodiment, nor to separate or alternative embodiments exclusive of other embodiments. It will be explicitly and implicitly appreciated by those skilled in the art that the embodiments described herein can be combined with other embodiments.

In the description of the embodiments of the present application, the term "and/or" is merely a way to describe the associative relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the term "plurality of" refers to two or more. Similarly, "plurality of groups" refers to two or more groups, and "plurality of pieces" refers to two or more pieces.

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise" "counterclockwise", "axial", "radial", "circumferential" and the like indicating directional or positional relationships are based on the directional or positional relationships shown in the drawings and are merely for the convenience of describing the embodiments of the present application and simplifying the description, rather than indicating or implying that the noted devices or elements must have specific directions or must be constructed and operated in specific directions. Therefore, these terms should not be construed as limitations on the embodiments of the present application.

In the description of the embodiments of the present application, unless otherwise clearly specified and defined, the technical terms "mount", "interconnect", "connect", "fix", and the like should be interpreted in their broad senses. For example, "connect" may be "fixedly connect", "detachably connect", or "integrally connect"; "mechanically connect" or "electrically connect"; or "directly interconnect", "indirectly interconnect through an intermediate", "communication between interiors of two elements", or "interaction between two elements". For those of ordinary skill in the art, the specific meanings of the above terms in the embodiments disclosed in the present application can be interpreted according to the specific condition.

With the rapid development of new energy technology globally, the application range of power batteries serving as a critical energy storage device is expanding at an unprecedented rate. The power batteries are indispensable energy storage solutions in renewable energy power stations such as hydropower, thermal power, wind power, and solar power stations, and are also deeply integrated into the field of electric transportation and become the core power source for electric bicycles, electric motorcycles, even electric automobiles, and other green travel means.

The application range of the power batteries serving as a key component of new energy technology is gradually expanding, and the market demand is continuously increasing. The power batteries play an indispensable role in the fields of renewable energy, electric transportation, military equipment, aerospace, etc.

With the development of power battery technology, higher and higher requirements are proposed for the energy density of the power batteries, and soft-pack batteries gradually become an important application type in the power batteries. An aluminum-plastic composite film is used for the shell of the soft-pack battery. Due to the lightweight characteristic of the aluminum-plastic film, the soft-pack battery is lighter with the same capacity and thus has a higher energy density.

In the design of a soft-pack battery, a battery system is often designed with a plurality of soft-pack batteries connected in parallel due to a small capacity of the soft-pack battery itself and the upper voltage limit of the battery system.

When an internal short circuit occurs in a soft-pack battery, the voltage of the soft-pack battery may drop, and a number of soft-pack batteries that are connected in parallel may discharge electricity to the soft-pack battery experiencing the short circuit, causing an increase in the temperature of the soft-pack battery experiencing the internal short circuit, and thus possibly causing the risk of runaway in the battery.

When a single soft-pack battery experiences thermal runaway, the internal active material becomes a resistive conductor, and electric discharge from the soft-pack batteries connected in parallel to the soft-pack battery experiencing thermal runaway may result in an increased local temperature in the soft-pack battery, thus bringing about potential safety hazards to the entire battery system.

In view of the above, in order to solve or alleviate the problem of the local excessive temperature in a battery device experiencing thermal runaway, the present application provides a battery device, including:
a plurality of thermally conductive housings;
a plurality of parallel units, where the parallel unit includes a plurality of pouch battery cells connected in parallel, and one thermally conductive housing correspondingly accommodates the plurality of pouch battery cells in one parallel unit;
a parallel circuit is provided between at least two pouch battery cells of the parallel unit;
a series unit, where the series unit includes the pouch battery cells connected in series and separately located in the plurality of parallel units, and a circuit between two pouch battery cells of different parallel units that are connected in series is a series circuit; and
a plurality of current limiters, where any of the parallel circuits is provided with the current limiter, and the current limiter is positioned outside the series circuit and configured for limiting the current in the corresponding parallel circuit.

In such a battery device, the battery device discharges electricity through the series circuit during normal operation, but in the case of thermal runaway in a pouch battery cell, the other pouch battery cells may discharge electricity to the pouch battery cell experiencing the thermal runaway through the current limiters, which limit the currents in corresponding parallel circuits to prevent excessive temperatures in the pouch battery cell in thermal runaway, thus leading to thermal runaway.

The battery device (or battery apparatus) according to the embodiments of the present application may include one or more battery cell assemblies for supplying voltage and capacity. The battery cell assembly may include a plurality of battery cells connected in series, parallel, or combination by a busbar component.

In some embodiments, a battery cell assembly is generally formed by the arrangement of a plurality of battery cells.

As an example, the battery cell assembly may be a battery module, in which a plurality of battery cells are arranged and fixed to form an independent module. As an example, the battery module may be formed by strapping the plurality of battery cells with a cable tie.

In some embodiments, the battery device may be a battery pack including a case and one or more battery cell assemblies, and the battery cell assemblies are accommodated in the case.

As an example, the battery cell assembly may be a battery module, and the battery cell assembly may be accommodated in the case by fixing the battery module in the case.

As an example, the battery cell assembly may also be accommodated in the case by directly fixing the plurality of battery cells to the case.

As an example, the case may include a first case and a second case. The first case and the second case are fastened together, so as to form an enclosed space inside the case to accommodate the battery cell assembly. The term "enclosed" as used herein refers to covering or closing, either sealed or unsealed. The first case may be a top cover or a bottom plate.

As an example, the case may include a top cover, a frame, and a bottom plate. The top cover and the bottom plate are separately connected to the frame, so as to form the enclosed space inside the case to accommodate the battery cell assembly.

In some embodiments, the case may be a part of the chassis structure of the vehicle. For example, a portion of the case may be at least a portion of the floor of the vehicle, or a portion of the case may be at least a portion of a transverse beam and a longitudinal beam of the vehicle.

The technical solutions described in the embodiments of the present application are applicable to various electric device that use battery cells, such as mobile phones, portable devices, laptops, battery cars, electric toys, electric tools, electric vehicles, ships, and spacecrafts. For example, the spacecraft includes an airplane, a rocket, a space shuttle, and a spaceship. The embodiments of the present application provide an energy storage device, including one or more battery clusters to increase the voltage and capacity of the energy storage device. The battery cluster may include a plurality of battery devices connected in series by a busbar component to increase the voltage of the energy storage device. When the energy storage device includes a plurality of battery clusters, the plurality of battery clusters are connected in parallel to increase the capacity of the energy storage device.

For the convenience of description, an embodiment of the present application in which a vehicle 1000 is taken as the example of the electric device is used for description.

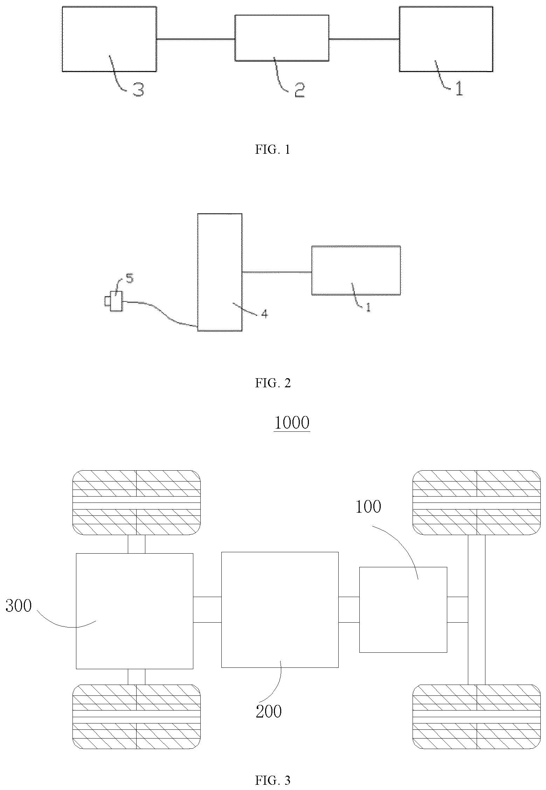

As shown in FIG. 3, FIG. 3 is a structural schematic view of a vehicle 1000 according to some embodiments of the present application. The vehicle 1000 may be a fuel vehicle, a gas vehicle or a new energy vehicle. The new energy vehicle may be a pure electric vehicle, a hybrid vehicle, an extended-range vehicle, or the like. A battery device 100 is provided inside the vehicle 1000, and the battery device 100 may be provided at a bottom, a head, or a tail of the vehicle 1000. The battery device 100 may be configured for powering the vehicle 1000. For example, the battery device 100 may serve as an operation power source of the vehicle 1000. The vehicle 1000 may further include a controller 200 and a motor 300. The controller 200 is configured for controlling the battery device 100 to power the motor 300, e.g., for the operation power needed by the vehicle 1000 for start-up, navigation, and driving.

In some embodiments of the present application, the battery device 100 may not only serve as an operation power source for the vehicle 1000, but also as a driving power source for the vehicle 1000 to, instead of or in part instead of fuel or natural gas, provide driving power for the vehicle 1000.

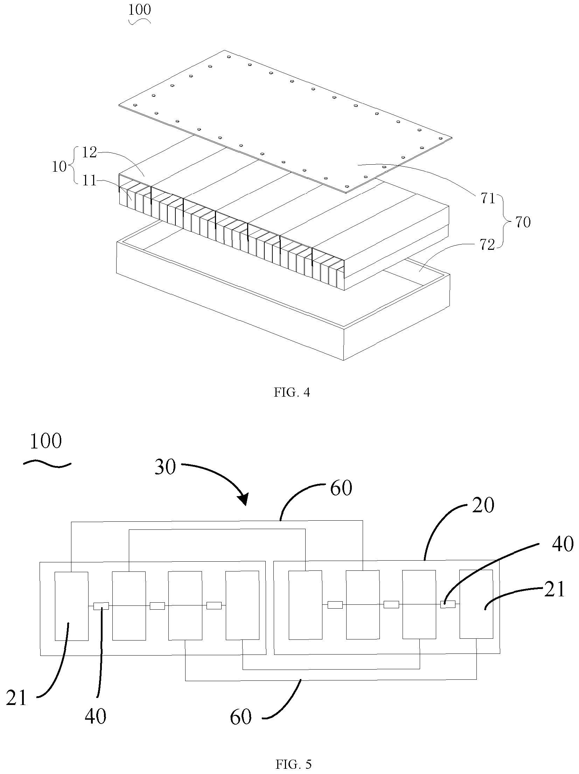

As shown in FIG. 4, FIG. 4 is an exploded structural schematic view of a battery device 100 according to some embodiments of the present application. The battery device 100 includes a case 70 and an energy unit accommodated in the case 70. The case 70 is configured for providing an enclosed space for the energy unit, and may be provided with various structures. In some embodiments, the case 70 may include a first part 71 and a second part 72. The first part 71 and the second part 72 mutually lids each other and jointly define an enclosed space for accommodating the energy unit. The second part 72 may be a hollow structure with one end open, and the first part 71 may be a plate-like structure. The first part 71 lids or covers the open side of the second part 72, such that the first part 71 and the second part 72 jointly define the enclosed space. The first part 71 and the second part 72 may also each be a hollow structure with one side open, and the open side of the first part 71 lids or covers the open side of the second part 72. Of course, the case 70 formed by the first part 71 and the second part 72 may be in various shapes, such as cylinder and cuboid.

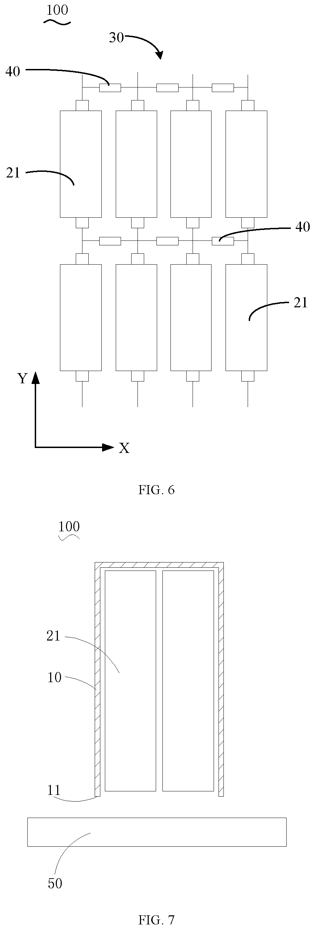

In some embodiments, as shown in FIGs. 5 and 6, the present application provides a battery device 100. The battery device 100 includes a plurality of thermally conductive housings 10, a plurality of parallel units 20, a series unit 30, and a plurality of current limiters 40.

The parallel unit 20 includes a plurality of pouch battery cells 21 connected in parallel, one thermally conductive housing 10 correspondingly accommodates the plurality of pouch battery cells 21 of one parallel unit 20, and a parallel circuit is provided between at least two pouch battery cells 21 in the parallel unit 20.

The series unit 30 includes the pouch battery cells 21 connected in series and separately located in the plurality of parallel units 20, and a circuit between two pouch battery cells 21 of different parallel units 20 that are connected in series is a series circuit.

Any of the parallel circuits is provided with the current limiter 40, and the current limiter 40 is positioned outside the series circuit and configured for limiting the current in the corresponding parallel circuit.

In the technical solution of the embodiments of the present application, the battery device 100 discharges electricity through the series circuit during normal operation, but in the case of the thermal runaway in a pouch battery cell 21, the other pouch battery cells 21 may discharge electricity to the pouch battery cell 21 experiencing the thermal runaway through the current limiters 40, which are configured for limiting the currents in corresponding parallel circuits to prevent excessive temperatures in the pouch battery cell 21 in thermal runaway.

In particular, the battery device 100 includes a plurality of pouch battery cells 21. As an example, the electrode assembly of the pouch battery cell 21 is accommodated in an aluminum-plastic film packaging pouch. The edges of the packaging pouch can be connected by means of heat sealing to form a sealed part, and an electrode lead-out part extends out of the packaging pouch to achieve the charging and discharging of the battery cells.

Since the pouch battery cell 21 is difficult to assemble, it is usually necessary to provide a rigid housing outside the pouch battery cells 21 for encapsulation, so as to facilitate the assembly. However, the provision of the rigid housing for an individual pouch battery cell 21 may affect the assembly efficiency or space utilization and the overall capacitance of the battery. Therefore, a plurality of pouch battery cells 21 are usually electrically connected and encapsulated into one rigid housing, which can improve the assembly efficiency, space utilization, and overall capacity of the battery while helping the assembly of the pouch battery cells 21.

Furthermore, the rigid housing is made of a material with a good thermal conductivity, so as to form the thermally conductive housing 10. The thermally conductive housing 10 can accommodate and protect the pouch battery cells 21, and efficiently conduct heat generated inside the battery to the exterior to keep the battery in a proper operating temperature range, which improves the operating efficiency and cycle life of the battery.

Optionally, the thermally conductive housing 10 includes a metallic thermally conductive housing 10, such as an aluminum alloy thermally conductive housing 10, which features high strength, good thermal conductivity, and corrosion resistance. The aluminum alloy housing can be prepared by a process such as compression and welding.

Optionally, the thermally conductive housing 10 includes a composite thermally conductive housing 10, such as a carbon fiber reinforced plastic (CFRP) thermally conductive housing 10 and a glass fiber reinforced plastic (GFRP) thermally conductive housing 10. The composite features light weight, high strength, and good thermal conductivity, and can further reduce the weight of the battery device 100 and increase the energy density of the battery device 100.

However, if a plurality of pouch battery cells 21 are encapsulated in one thermally conductive housing 10, the plurality of pouch battery cells 21 connected in parallel are likely to experience an internal short circuit such that the heat from the plurality of pouch battery cells 21 in the thermally conductive housing 10 accumulates in a short time and is difficult to dissipate timely, resulting in the spread of heat between the plurality of pouch battery cells 21 in the thermally conductive housing 10 or even the spread of heat between different thermally conductive housings 10.

In view of the above problem, any of the parallel circuits between the plurality of pouch battery cells 21 in a thermally conductive housing 10 is provided with the current limiter 40, which can reduce the probability of the concentrated generation of heat within a short time due to the internal short circuit. Therefore, it is possible to use a single thermally conductive housing 10 for encapsulating a plurality of pouch battery cells 21, and the thermally conductive housing 10 facilitates the timely dissipation of heat to reduce the probability of spread of heat between the plurality of pouch battery cells 21.

The parallel unit 20 includes a plurality of pouch battery cells 21, and the plurality of pouch battery cells 21 connected in parallel such that a parallel circuit is formed between at least two pouch battery cells 21. The plurality of pouch battery cells 21 in one parallel unit 20 are accommodated in one thermally conductive housing 10.

The series unit 30 includes the pouch battery cells 21 connected in series and located in different parallel units 20, and a circuit between two pouch battery cells 21 connected in series is a series circuit.

The current limiter 40 is provided in each parallel circuit for limiting the current in the corresponding parallel circuit. As such, a current flowing through the parallel circuit may have a current value less than or equal to the current value limited by the current limiter 40.

In addition, the current limiter 40 is located outside the series circuit, and the voltages are equal at the two ends of the current limiter 40. Thus, when the battery device 100 is in a normal operation state, the current passes through the series circuit rather than the parallel circuit, and the current limiter 40 has no effect on the current in the series circuit.

In the event of an internal short circuit in a certain pouch battery cell 21 in the battery device 100, the current passes through the parallel circuit, and the current limiter 40 limits the current in the corresponding parallel circuit, thereby preventing the local excessive temperature in the pouch battery cell 21 in thermal runaway.

In one embodiment, as shown in FIG. 6, the battery device 100 includes two parallel units 20, where each parallel unit 20 includes four pouch battery cells 21, and the four pouch battery cells 21 are connected in parallel to form three parallel circuits. The four pouch battery cells 21 of the two parallel battery cells 20 are connected in series in pairs, forming four series circuits. Each parallel circuit is provided with the current limiter 40.

As such, when the battery device 100 is in the normal operation state, currents pass through the four series circuits rather than the parallel circuits, and the current limiters 40 have no effect on the currents in the series circuits. In the event of an internal short circuit of a certain pouch battery cell 21 in the battery device 100, the other pouch battery cells 21 discharge electricity to the pouch battery cell 21 through the parallel circuit, and the current limiter 40 limits the current in the corresponding parallel circuit, thereby preventing the local excessive temperature in the pouch battery cell 21 in thermal runaway.

In some embodiments, as shown in FIG. 7, the thermally conductive housing 10 is provided with at least one open end surface 11, the battery device 100 includes a cold plate 50, the open end surface 11 faces toward the cold plate 50, and the thermally conductive housing 10 is connected to the cold plate 50 or the pouch battery cells 21 are connected to the cold plate 50 for heat dissipation.

In the above technical solution, during the operational discharge, the pouch battery cell 21 generates heat and transfers the heat to the thermally conductive housing 10. The thermally conductive housing 10 is provided with the open end surface 11, and the cold plate 50 may be in contact with the pouch battery cells 21 or the open end surface 11 of the thermally conductive housing 10, such that the cold plate 50 absorbs and dissipates the heat generated by the pouch battery cells 21, so as to maintain the operating temperature of the battery device 100 at a temperature suitable for operation.

In particular, the side of the cold plate 50 proximal to the open end surface 11 of the thermally conductive housing 10 is in contact with the thermally conductive housing 10 or the pouch battery cells 21 in the thermally conductive housing 10 to absorb and dissipate the heat generated by the pouch battery cells 21.

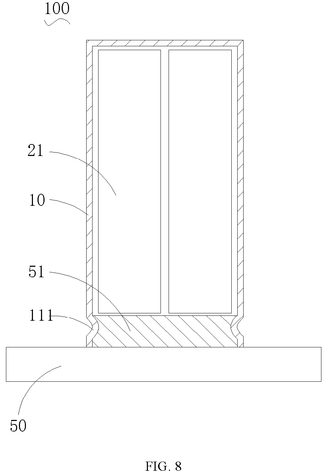

In some embodiments, as shown in FIG. 8, a gap is provided between the side of the pouch battery cells 21 proximal to the open end surface 11 and the cold plate 50, and the gap is filled with a thermally conductive adhesive 51.

In the above technical solution, an accommodating space is formed in the thermally conductive housing 10 for accommodating the pouch battery cells 21. The thermally conductive housing 10 is fixedly connected to the cold plate 50, the gap is provided on the side of the pouch battery cells 21 proximal to the open end surface 11 and is filled with thermally conductive adhesive 51, and the heat is transferred from the pouch battery cells 21 to the cold plate 50 through the thermally conductive adhesive 51, so as to allows improved heat dissipation from the pouch battery cells 21.

In particular, thermally conductive adhesive 51 is a single-component, thermally conductive silicone adhesive sealant that is curable at room temperature, and may experience condensation reaction with water in the air to release low molecules which cause cross-link curing and is thus vulcanized into a high-performance elastomer.

The thermally conductive adhesive 51 has distinguished thermal cycling resistance, aging resistance, and electrical insulation properties, as well as excellent moisture resistance, shock resistance, corona resistance, leakage resistance, and chemical media resistance.

The thermally conductive adhesive 51 can be used at a temperature between -60 °C and 280 °C for an extended time with its properties retained, no swelling observed, and good adhesion to most metal and non-metal materials.

On the one hand, filling the gap between the pouch battery cells 21 and the cold plate 50 with the thermally conductive adhesive 51 allows the fixation of the relative positions of the cold plate 50 and the pouch battery cells 21 to prevent the pouch battery cells 21 from moving in the thermally conductive housing 10 and damaging the electrical connection structure of the battery device 100. On the other hand, the thermally conductive adhesive 51 thermo-conductively connects the pouch battery cells 21 to the cold plate 50 to achieve an improved effect of heat dissipation.

In some embodiments, as shown in FIG. 8, an end part of the open end surface 11 is provided with a limiting part 111, and the limiting part 111 protrudes towards the interior of the thermally conductive housing 10 and is arranged between the pouch battery cells 21 and the open end surface 11.

In the above technical solution, the end part of the open end surface 11 is provided with the limiting part 111, and the limiting part 111 is located between the pouch battery cells 21 and the open end surface 11 and is configured for limiting the positions of the pouch battery cells 21, so as to prevent the pouch battery cells 21 from falling out of the open end surface 11 during the movement and assembly of the battery device 100.

In particular, the limiting part 111 is arranged at the end part of the open end surface 11 and protrudes toward the interior of the thermally conductive housing 10, the pouch battery cells 21 are accommodated in the thermally conductive housing 10, and the limiting part 111 can block the continuous movements of the pouch battery cells 21 when the pouch battery cells 21 move toward the open end surface 11 in the thermally conductive housing 10, such that the pouch battery cells 21 can be prevented from falling from the side of the open end surface 11 during the movement or assembly of the thermally conductive housing 10 containing the pouch battery cells 21.

In some embodiments, as shown in FIG. 8, the thermally conductive housing 10 includes two of the open end surfaces 11, the two open end surfaces 11 are both provided with the limiting part 111, the gap is provided between the side of the pouch battery cells 21 proximal to the open end surfaces 11 and the cold plate 50 and is filled with the thermally conductive adhesive 51, and the thermally conductive adhesive 51 is at least partially located between the two limiting parts 111 so as to thermo-conductively connect the pouch battery cells 21 on one side of the limiting parts 111 to the cold plate 50 on the other side of the limiting parts 111.

In the above technical solution, the accommodating space for the pouch battery cells 21 formed in the thermally conductive housing 10 is in communication with the exterior through an opening between two open end surfaces 11, and the pouch battery cells 21 enter the accommodating space through the opening between the two open end surfaces 11. At least a part of the thermally conductive adhesive 51 is applied between the limiting parts 111 of the two open end surfaces 11 so as to thermo-conductively connect the pouch battery cells 21 and the cold plate 50 located on the two sides of the limiting parts 111. As such, the pouch battery cells 21 are in direct contact with the thermally conductive housing 10, and are thermo-conductively connected to the cold plate 50 through the thermally conductive adhesive 51, such that the thermally conductive housing 10 and the cold plate 50 may have an improved heat dissipation effect on the pouch battery cells 21.

In particular, the thermally conductive housing 10 is U-shaped and is provided with two open end surfaces 11 and an accommodating space formed therein for the pouch battery cells 21. The accommodating space is in communication with the exterior through the opening between the two open end surfaces 11, the pouch battery cells 21 are placed in the accommodating space through the opening, and the cold plate 50 is connected to the two open end surfaces 11 to close the opening of the thermally conductive housing 10, so as to enclose the pouch battery cells 21 in the accommodating space of the thermally conductive housing 10.

For the bonding between the thermally conductive housing 10 and the pouch battery cells 21, in the case of the presence of a plurality of pouch battery cells 21 in the thermally conductive housing 10, the plurality of pouch battery cells 21 are arranged in a first direction, and the plurality of pouch battery cells 21 are bonded and fixed together, so as to fix the pouch battery cells 21 in the thermally conductive housing 10.

As an example, an adhesive is used to bond the thermally conductive housing 10 to the pouch battery cells 21 and to bond adjacent pouch battery cells 21. The adhesive may be insulating to insulate the thermally conductive housing 10 from the pouch battery cells 21.

In some embodiments, as shown in FIGs. 5 and 6, the pouch battery cell 21 includes an electrode lead, the battery device 100 includes a first connection member 60, the first connection member 60 is connected to the electrode leads of the pouch battery cells 21 in different parallel units 20 to form the series circuit, and the current limiter 40 is connected to the electrode leads of different pouch battery cells 21 in the same parallel unit 20 to form the parallel circuit.

In the above technical solution, the electrode lead is configured for the electrical connection between the pouch battery cells 21 and the first connection member 60 and the current limiter 40. The first connection member 60 is connected to the electrode leads of the pouch battery cells 21 in different parallel units 20 to form the series circuit. The current limiter 40 is connected to the electrode leads of different pouch battery cells 21 in the same parallel unit 20 to form the parallel circuit. As such, the plurality of pouch battery cells 21 form a plurality of parallel units 20 and series units 30.

The battery device 100 outputs electrical energy in the normal operation through the series circuit formed by the first connection member 60, and in the case of the thermal runaway in a certain pouch battery cell 21, the other pouch battery cells 21 may discharge electricity to the pouch battery cell 21 experiencing the thermal runaway through the current limiters 40, which limit the currents in the parallel circuits to prevent excessive temperatures in the pouch battery cell 21 in thermal runaway.

In particular, the pouch battery cell 21 includes the electrode lead that may lead out in two directions of a flexible shell of the pouch battery cell 21, or may lead out only from one side of the flexible shell of the pouch battery cell 21. In the example illustrated, the electrode lead leads out in two directions of the pouch battery cell 21 (as in the y-axis direction in FIG. 6).

The first connection member 60 is configured for connecting the pouch battery cells 21 of two parallel units 20 in series to form a series circuit between every two pouch battery cells 21 in series.

Optionally, the first connection member 60 may be a wire directly connecting the electrode leads of two pouch battery cells 21, thus achieving the series connection between the two pouch battery cells 21. In the normal operation of the battery device 100, the current flowing through the series circuit formed by means of wire connection can reduce energy loss in the series circuit.

Optionally, the electrode leads of the two pouch battery cells 21 may be directly connected by welding to form the first connection member 60. As such, the connection method is simple and reliable and easy to implement while the energy loss in the series circuit can be reduced.

The current limiters 40 are configured for connecting the plurality of pouch battery cells 21 in parallel to form the parallel circuits between the plurality of pouch battery cells 21.

Optionally, the current limiter 40 includes a metal structural member, which connects two pouch battery cells 21 to form the parallel circuit and has a certain resistance to limit the currents in the parallel circuits.

Optionally, the current limiter 40 includes a resistor directly connected to the electrode lead. The resistor having a certain resistance is connected to two pouch battery cells 21 to form the parallel circuit and can define the current in the parallel circuit.

In one embodiment, the battery device 100 includes a busbar member including the first connection member 60 and the current limiter 40. The first connection member 60 and the current limiter 40 are insulated from each other, and the busbar member may be connected to a pouch battery by separately connecting the first connection member 60 and the current limiter 40 to the electrode leads of the pouch battery.

In some embodiments, the resistance of the current limiter 40 is greater than that of the first connection member 60.

In the above technical solution, the resistance of the current limiter 40 is greater than that of the first connection member 60, such that in the normal operation of the battery device 100, the current first passes through the first connection member 60, and no current passes through the current limiter 40. As such, the current limiter 40 has no effect on the battery device 100 when the battery device 100 is in normal operation.

In particular, the resistance of the current limiter 40 is greater than that of the first connection member 60, whereby the loss of the current in the series circuit is lower in the normal operation of the battery device 100. In the case of the thermal runaway in a certain pouch battery cell 21, the other pouch battery cells 21 may discharge electricity to the pouch battery cell 21 experiencing the thermal runaway through the current limiters 40, and the current flowing through the parallel circuit is controlled at a smaller value by means of the great resistance, thereby preventing excessive temperatures in the pouch battery cell 21 in thermal runaway.

In some embodiments, the first connection member 60 and the current limiter 40 are each of an electrically conductive material, and an insulating layer is provided between the current limiter 40 and the first connection member 60.

In the above technical solution, both the first connection member 60 and the current limiter 40 are connected to the electrode leads of the pouch battery cells 21, and due to the small space in the end part of the pouch battery cells 21, the insulating layer provided between the first connection member 60 and the current limiter 40 can avoid the direct connectivity between the first connection member and the current limiter, thus allowing the battery device 100 to generate heat and consume energy during normal operation due to the current passing through the current limiter 40.

In particular, the first connection member 60 and the current limiter 40 are each of an electrically conductive material to achieve the electrical connection between the pouch battery cells 21.

Optionally, an insulation spacer selected from polyimide, polypropylene, polyethylene, polycarbonate or polyurethane foam, silicone foam, and the like is provided as an insulating layer between the first connection member 60 and the current limiter 40. The above-mentioned materials have good heat resistance, insulation, and certain mechanical strength to ensure the reliability of insulation between the first connection member 60 and the current limiter 40.

Optionally, the insulation between the first connection member 60 and the current limiter 40 may be achieved by providing an insulation coating on the surfaces of the first connection member 60 and the current limiter 40 facing toward each other as the insulating layer.

In some embodiments, on the same pouch battery cell 21, the first connection member 60 and the current limiter 40 are separately connected to different locations on the same side surface of the electrode lead, or the first connection member 60 and the current limiter 40 are separately connected to different side surfaces of the electrode lead.

In the above technical solution, the first connection member 60 and the current limiter 40 are separately connected to the electrode lead of the same pouch battery cell 21, and the first connection member 60 and the current limiter 40 are spatially isolated from each other and thus located at different positions on the same side surface of the electrode lead or connected to different side surfaces of the electrode lead, so as to avoid the direct connectivity between the first connection member 60 and the current limiter 40.

In particular, the first connection member 60 is insulated from the current limiter 40. In order to ensure the reliability of the insulation, the spatial isolation between the first connection member 60 and the current limiter 40 can avoid the direct connectivity between the first connection member 60 and the current limiter 40.

In some embodiments, the resistance of the current limiter 40 is greater than or equal to 0.2 Ω, or the current limiter 40 is configured for limiting the current in the parallel circuit to less than or equal to 20 A.

In the above technical solution, the current limiter 40 is configured for limiting the current in any of the parallel circuits to 20 A or less. As such, by configuring the current limiter 40 with a resistance of greater than or equal to 0.2 Ω to limit the current in the parallel circuit to 20 A or less, the local excessive temperature of the battery device 100 due to the excessive current in the parallel circuit can be avoided in the event of a short circuit or thermal runaway in the pouch battery cell 21.

In particular, a greater resistance of the current limiter 40 may lead to a smaller current in the parallel circuit. As such, the resistance of the current limiter 40 can be controlled according to actual needs, so as to control the current in the parallel circuit within a proper range.

In some embodiments, the range of the resistance of the current limiter 40 is [0.2 Ω, 1000 Ω].

In the above technical solution, limiting the resistance of the current limiter 40 in a range of [0.2 Ω, 1000 Ω] can limit the current in the parallel circuit to 20 A or less. However, an excessive resistance of the current limiter 40 may cause severe overheating in the current limiter 40. Configuring the resistance of the current limiter 40 in a suitable range allows a better control of the current in the parallel circuit and the heat generation of the current limiter 40, thus avoiding the local excessive temperature of the battery device 100 due to the excessive current in the parallel circuit in the event of a short circuit or thermal runaway of the pouch battery cell 21.

In particular, an insufficient resistance of the current limiter 40 cannot effectively limit the current in the parallel circuit, and an excessive resistance of the current limiter 40 may cause severe overheating in the current limiter 40.

Therefore, the resistance of the current limiter 40 may be 0.2 Ω, 1 Ω, 5 Ω, 10 Ω, 50 Ω, 100 Ω, 200 Ω, 500 Ω, 800 Ω or 1000 Ω, or any other value in the range of 0.2 Ω to 1000 Ω. Thus, the current in the parallel circuit and the heat generation of the current limiter 40 can be better controlled, thus preventing the local excessive temperature of the battery device 100 due to the excessive current in the parallel circuit.

In some embodiments, the pouch battery cell 21 includes a body part 212 and an electrode lead, the body parts 212 of the plurality of the pouch battery cells 21 in the same thermally conductive housing 10 are arranged in a row in a first direction, and the current limiter 40 is located on one side of the body part 212 in a second direction; the first direction and the second direction are perpendicular to each other.

In the above technical solution, the body parts 212 of the pouch battery cells 21 are arranged in a row in the first direction, and the current limiter 40 is located on one side of the body part 212 in the second direction, that is, both a plurality of body parts 212 and a plurality of current limiters 40 are arranged in the first direction. Such configuration can avoid sandwiching the current limiter 40 between two body parts 212 and thus the breakage of the pouch battery cells 21 caused by compressing the pouch battery cells 21.

In particular, as shown in FIG. 6, the battery device 100 includes a plurality of parallel units 20. Each parallel unit 20 includes a plurality of pouch battery cells 21. The body parts 212 of the plurality of pouch battery cells 21 are arranged in a row in the first direction. A plurality of pouch battery cells 21 are connected in parallel to form the parallel circuit. Each parallel circuit is provided with the current limiter 40, and the current limiter 40 is located on one side of the body part 212 in the second direction. As such, it is possible to avoid that the current limiter 40 is sandwiched between two body parts 212. The first direction is the X-axis direction in the figure and the second direction is the Y-axis direction in the figure.

In some embodiments, the pouch battery cell 21 includes an outer flexible shell and an electrode assembly; the electrode assembly comprises an electrode plate part and a tab part, and the current limiter 40 is misaligned with the electrode plate part in the first direction.

In the above technical solution, the pouch battery cell 21 includes the outer flexible shell and the electrode assembly, where the outer flexible shell is configured for accommodating the electrode assembly. The misalignment of the current limiter 40 to the electrode plate part in the first direction prevents the current limiter 40 from compressing the electrode plate part and thereby prevents the poor contact at the electrode plate part and thus lithium deintercalation. Lithium deintercalation may lead to an increase in the internal temperature of the battery and thus an increase in the internal resistance of the battery and thereby affect the capacity and discharge performance of the battery device 100.

In particular, the electrode assembly includes an electrode plate part and a tab part connected to the electrode plate part. One end of the electrode lead is connected to the tab part, while the other end extends out of the outer flexible shell. The electrode plate part is partially compressed or deformed, which may cause poor contact at the electrode plate, resulting in an area with poor lithium intercalation accompanied by lithium deintercalation. The misalignment of the current limiter 40 with the electrode plate part in the first direction can prevent the current limiter 40 from compressing the electrode plate part during the movement of the battery device 100.

In one embodiment, the battery device 100 was an 80 Ah (ampere-hour) ternary lithium battery with dimensions of 13.8 mm × 123 mm × 355 mm. A built-in L-shaped foreign matter compression test was performed on the above battery device 100 in accordance with the new International Electrotechnical Commission (IEC) safety standard for power batteries IEC 62660-3. The results are shown as follows.

| No. | Parallel/series connection of battery cells | Resistance of current limiter 40 | Item | Result |
|---|---|---|---|---|
| 1 | 4P2S | 0 | Compression by built-in L-shaped foreign matter | Failure after 3 min of standing |
| 2 | 4P2S | 0.15 | Compression by built-in L-shaped foreign matter | Failure after 40 min of standing |
| 3 | 4P2S | 0.2 | Compression by built-in L-shaped foreign matter | No failure observed |
| 4 | 4P2S | 10 | Compression by built-in L-shaped foreign matter | No failure observed |

4P2S denotes that the battery device 100 included two parallel units 20, and the two parallel units 20 were connected in series. Each parallel unit 20 included four pouch battery cells 21, and the four pouch battery cells 21 were connected in parallel to form three parallel circuits. The four pouch battery cells 21 of the two parallel battery cells 20 were connected in series in pairs, forming four series circuits. Each parallel circuit was provided with the current limiter 40.

The built-in L-shaped foreign matter compression test is a compression test for batteries. The purpose of the test is to evaluate whether an internal foreign matter may cause compromised performance, damage, or safety hazards in a product when the battery device 100 is subjected to an external mechanical pressure. A sample of the battery device 100 under test was prepared for testing and a simulative L-shaped foreign matter was placed inside the battery device 100. The foreign matter had a certain rigidity and dimensions to simulate a foreign matter that may exist in an actual situation.

In the compression test, the battery or product was compressed using a special compression test instrument. The direction and force of compression were set according to an actual usage scene and a possible stress in the product. During the compression, the parameters of the battery or product such as voltage, current and temperature, and the presence of abnormal sound, odor, leakage or the like were continuously monitored.

The data of the battery device 100 such as voltage change, current fluctuation, and temperature change was recorded during the test, and the test results were analyzed to evaluate the impacts of the internal foreign matters on the performance of the battery or product, and finally the above table was obtained.

In summary, the provision of the current limiter 40 in any of the parallel circuits between the plurality of pouch battery cells 21 in a thermally conductive housing 10 can reduce the probability of the concentrated generation of heat within a short time due to the internal short circuit.

According to some embodiments of the present application, the pouch battery cell 21 is any one of a lithium iron phosphate battery cell, a ternary lithium battery cell, and a solid-state battery cell.

That is, in some embodiments, the pouch battery cell 21 is configured into a lithium iron phosphate battery; in some embodiments, the pouch battery cell 21 is configured into a ternary lithium battery cell; and in some embodiments, the pouch battery cell 21 is configured into a solid-state battery cell.

The solid-state battery cell may be, but is not limited to, a polymer solid-state battery cell, an oxide solid-state battery cell, a sulfide solid-state battery cell, a halide solid-state battery cell, or the like. The solid-state battery cell may also be a semi-solid-state battery cell or an all-solid-state battery cell.

In the above technical solution, in the embodiments of the present application in which the pouch battery cell is configured into a lithium iron phosphate battery cell, the reliability of the pouch battery cell may be improved, and the cycle life of the pouch battery cell may be prolonged. In the embodiments of the present application in which the pouch battery cell is configured into a ternary lithium battery cell, the energy density of the pouch battery cell may be improved, and the endurance mileage may be extended. In the embodiments of the present application in which the pouch battery cell is configured into a solid-state pouch battery cell, both the energy density and the reliability may be increased.

According to some embodiments of the present application, when the pouch battery cell 21 is a lithium iron phosphate (LiFeO₄) battery cell, in the positive electrode material of the pouch battery cell 21, the ratio of the amounts of a positive electrode active material, a positive electrode binder, and a positive electrode conductive agent is 96:(1-3):(1-3); when the pouch battery cell 21 is a ternary lithium battery cell, in the positive electrode material of the pouch battery cell 21, the ratio of the amounts of a positive electrode active material, a positive electrode binder, and a positive electrode conductive agent is 96:(2-3):(1-2).

It will be appreciated that, when the pouch battery cell 21 is a lithium iron phosphate battery cell, in the positive electrode material of the pouch battery cell 21, on the basis of the total weight of the positive electrode material, the positive electrode active material accounts for 96 parts by weight, the binder accounts for 1 to 3 parts by weight (for example, but not limited to, 1, 1.2, 1.5, 1.8, 2, 2.2, 2.5, 2.8, 3, etc.), and the conductive agent accounts for 1 to 3 parts by weight (for example, but not limited to, 1, 1.2, 1.5, 1.8, 2, 2.2, 2.5, 2.8, 3, etc.).

Illustratively, when the pouch battery cell 21 is a lithium iron phosphate battery cell, the positive electrode active material is LFP (which may refer to LiFePO₄, i.e., lithium iron phosphate), the binder may be PVDF (polyvinylidene difluoride), and the conductive agent may be conductive carbon black, where LFP:PVDF:conductive carbon black may be 96:2:2, that is, dividing the total weight of the positive electrode active material into 100 parts, LFP accounts for 96 parts, PVDF accounts for 2 parts, and the conductive carbon black accounts for 2 parts. The unit of weight for the positive electrode active material may be gram.

When the pouch battery cell 21 is a ternary battery cell, in the positive electrode material of the pouch battery cell 21, on the basis of the total weight of the positive electrode material, the positive electrode active material accounts for 96 parts by weight, the binder accounts for 2 to 3 parts by weight (for example, but not limited to, 2, 2.2, 2.5, 2.8, 3, etc.), and the conductive agent accounts for 1 to 2 parts by weight (for example, but not limited to, 1, 1.2, 1.5, 1.8, 2, etc.). The ternary battery cell may be, but is not limited to, a lithium nickel cobalt manganese oxide system, a lithium nickel cobalt aluminum oxide system, and the like.

Illustratively, the ternary material of the ternary battery cell may be an eight-series LiNi_{0.8}Co_{0.1}Mn_{0.1}O₂, and the ratio of the positive electrode active material, the binder, and the conductive agent in parts by weight is 96:2.5:1.5, that is, that is, dividing the total weight of the positive electrode material into 100 parts, the eight-series LiNi_{0.8}Co_{0.1}Mn_{0.1}O₂ accounts for 96 parts, the binder accounts for 2.5 parts, and the conductive agent accounts for 1.5 parts.

In the above technical solution, when the pouch battery cell 21 is a lithium iron phosphate battery cell, the high proportion of the positive electrode active material means that a greater amount of the substances for the electrochemical reaction can be contained in a limited electrode assembly, which is beneficial to increasing the capacity and the energy density of the battery device 100, such that the lithium iron phosphate battery cell can output a higher power in the condition of a relatively small volume and weight, thus satisfying an application scene with a certain requirement on the energy density. The amounts of the binder and the conductive agent within the above ranges can improve the cost-efficiency of the auxiliary materials, thereby improving the overall cost-efficiency of the battery device 100. When the pouch battery cell 21 is a ternary battery cell, due to the fact that the structure and surface properties of the ternary material are relatively complicated, the positive electrode active material, the binder, and the conductive agent in the above amount ratio may ensure a good adhesion among the positive electrode active material particles and between the active material and the current collector, thus improving the mechanical stability and integrity of the electrode assembly, reducing the risk of falling-off of the active material and electrode pulverization in the charging and discharging process, and prolonging the cycle life of the battery device 100.

In a second aspect, the present application provides an energy storage device 1, including a plurality of battery devices 100 according to any one of the above embodiments, where the battery device 100 is configured for storing or providing electrical energy.

The energy storage device may be used in an energy storage station, a wind power generation system, a solar power system, a mobile power system, or a temporary power supply system. The energy storage device can store electrical energy as needed and output the electrical energy when appropriate. For example, the energy storage device can store electrical energy during periods of low power demand and provide the electrical energy to relevant users or electric devices during periods of high power demand.

In some embodiments, the energy storage device is an energy storage container or an energy storage cabinet.

In some embodiments, the energy storage device may include a cabinet and one or more battery clusters accommodated in the cabinet.

In some embodiments, the energy storage device may include a thermal management module, a master control module, a general control module, a power distribution module, a fire protection module, and the like.

As an example, the thermal management module may include a liquid cooling unit that provides a coolant liquid to the battery devices through pipelines so as to regulate the temperature of the battery cells.

As an example, the master control module may serve as a battery management unit for the battery cluster to monitor and manage the battery cluster. The master control module can monitor information about the battery cluster such as current, voltage, power, or temperature. For example, it is possible to control the charge-discharge current, voltage, and the like of the battery cluster. The master control module includes modules such as a slave battery management unit (SBMU) and a fusion switch.

As an example, the general control module may serve as a battery management unit of the energy storage device to monitor and manage the energy storage device. The general control module can monitor information about the energy storage device such as current, voltage, power, state of charge, or temperature. For example, it is possible to control the charge-discharge current, voltage, and the like of the energy storage device. As an example, the general control module includes an insulation monitoring module (IMM), a master battery management unit (MBMU), Ethernet (ETH), an optical fiber conversion module, and the like.

As an example, the fire protection system includes a control panel, a detector, an alarm device, and the like for detection, alert, or extinguishment of fire.

As an example, the power distribution device may be used to distribute power to an electric module of the energy storage device.

In a third aspect, the present application provides an energy storage system, including a power converter system 2 and the energy storage device 1 according to the above embodiment, where the power converter system 2 is configured for electrically connecting a power generation device to the energy storage device 1.

The energy storage system provided in the embodiment of the present application may be any power system that requires an energy storage device.

In some embodiments, as shown in FIG. 1, the energy storage system may include one or more energy storage devices 1 and the power converter system (PCS) 2, where the power converter system 2 is configured for the connection between a power generation apparatus 3 and the energy storage device 1. The power generation apparatus 3 is configured for generating electrical energy, which may be stored in the energy storage device 1 through the power converter system 2. As an example, the power generation apparatus 3 may in particular be a solar panel, a hydroelectric apparatus, a fire power generation apparatus, a wind power generation apparatus, or the like. The specific type of the power generation apparatus 3 is not limited in the present application.

In a fourth aspect, the present application provides an electric device, including: the battery device 100 according to any one of the above embodiments, and the energy storage device 1 according to the above embodiment or the energy storage system according to the above embodiment, where the battery device 100, the energy storage device 1, or the energy storage system is configured for providing electrical energy to the electric device.

In a fifth aspect, the present application provides a charging network, including a charging pile and the energy storage device according to the above embodiment or the energy storage system according to the above embodiment, where the energy storage device or the energy storage system is configured for providing electrical energy to the charging pile.

As shown in FIG. 2, the charging pile 4 and the energy storage device 1 are included. The charging pile 4 is electrically connected to the energy storage device 1, and the energy storage device 1 is configured for providing electrical energy to the charging pile 4. The charging pile 4 is electrically connected to the battery device of the energy storage device 1 through a cable, and the battery device can provide the electrical energy stored therein to the charging pile 4. The charging pile 4 has one or more connectors 5 for connecting an electric device (such as a vehicle) so as to supply the electric device with power.

The energy storage device may be located in the charging pile (for example, an integral storage and charging device) or outside the charging pile.

Finally, it should be noted that the above embodiments are only used to illustrate the technical solutions of the present application, rather than limit same. Although the present application has been described in detail with reference to the foregoing embodiments, those of ordinary skill in the art will appreciate that modifications can still be made to the technical solutions recorded in the foregoing embodiments, or equivalent substitutions to some or all of the technical features. However, such modifications or substitutions do not make the spirit of the corresponding technical solutions deviate from the scope of the technical solutions in the embodiments of the present application, and shall all fall within the scope of claims and specification of the present application. In particular, the technical features mentioned in the embodiments can be combined in any manner, provided that there is no structural conflict. The present application is not limited to the specific embodiments disclosed herein but includes all the technical solutions that fall within the scope of the claims.

## Claims

1. A battery device, comprising:
a plurality of thermally conductive housings;
a plurality of parallel units, wherein the parallel unit comprises a plurality of pouch battery cells connected in parallel, and one thermally conductive housing correspondingly accommodates the plurality of pouch battery cells in one parallel unit;
a parallel circuit is provided between at least two pouch battery cells of the parallel unit;
a series unit, wherein the series unit comprises the pouch battery cells connected in series and separately located in the plurality of parallel units, and a circuit between two pouch battery cells of different parallel units that are connected in series is a series circuit; and
a plurality of current limiters, wherein any of the parallel circuits is provided with the current limiter, and the current limiter is positioned outside the series circuit and configured for limiting the current in the corresponding parallel circuit.

2. The battery device according to claim 1, wherein the thermally conductive housing is provided with at least one open end surface, the battery device comprises a cold plate, the open end surface faces toward the cold plate, and the thermally conductive housing is connected to the cold plate or the pouch battery cells are connected to the cold plate for heat dissipation.

3. The battery device according to claim 2, wherein a gap is provided between the side of the pouch battery cells proximal to the open end surface and the cold plate, and the gap is filled with a thermally conductive adhesive.

4. The battery device according to claim 2 or 3, wherein an end part of the open end surface is provided with a limiting part, and the limiting part protrudes towards the interior of the thermally conductive housing and is arranged between the pouch battery cells and the open end surface.

5. The battery device according to claim 4, wherein the thermally conductive housing comprises two of the open end surfaces, the two open end surfaces are both provided with the limiting part, the gap is provided between the side of the pouch battery cells proximal to the open end surfaces and the cold plate and is filled with the thermally conductive adhesive, and the thermally conductive adhesive is at least partially located between the two limiting parts so as to thermo-conductively connect the pouch battery cells on one side of the limiting parts to the cold plate on the other side of the limiting parts.

6. The battery device according to any one of claims 1-5, wherein the pouch battery cell comprises an electrode lead, the battery device comprises a first connection member, the first connection member is connected to the electrode leads of the pouch battery cells in different parallel units to form the series circuit, and the current limiter is connected to the electrode leads of different pouch battery cells in the same parallel unit to form the parallel circuit.

7. The battery device according to claim 6, wherein the resistance of the current limiter is greater than that of the first connection member.

8. The battery device according to claim 6 or 7, wherein the first connection member and the current limiter are each of an electrically conductive material, and an insulating layer is provided between the current limiter and the first connection member.

9. The battery device according to any one of claims 6-8, wherein on the same pouch battery cell, the first connection member and the current limiter are separately connected to different locations on the same side surface of the electrode lead, or the first connection member and the current limiter are separately connected to different side surfaces of the electrode lead.

10. The battery device according to any one of claims 1-9, wherein the resistance of the current limiter is greater than or equal to 0.2 Ω, or the current limiter is configured for limiting the current in the parallel circuit to less than or equal to 20 A.

11. The battery device according to claim 10, wherein the range of the resistance of the current limiter is [0.2 Ω, 1000 Ω].

12. The battery device according to any one of claims 1-5, wherein the pouch battery cell comprises a body part and an electrode lead, the body parts of the plurality of the pouch battery cells in the same thermally conductive housing are arranged in a row in a first direction, and the current limiter is located on one side of the body part in a second direction; the first direction and the second direction are perpendicular to each other.

13. The battery device according to claim 12, wherein the pouch battery cell comprises an outer flexible shell and an electrode assembly; the electrode assembly comprises an electrode plate part and a tab part, and the current limiter is misaligned with the electrode plate part in the first direction.

14. The battery device according to any one of claims 1-13, wherein the pouch battery cell is any one of a lithium iron phosphate battery cell, a ternary battery cell, and a solid-state battery cell.

15. An energy storage device, comprising a plurality of the battery devices according to any one of claims 1-14, wherein the battery device is configured for storing or providing electrical energy.

16. An energy storage system, comprising a power converter system and the energy storage device according to claim 15, wherein the power converter system is configured for electrically connecting a power generation device to the energy storage device.

17. An electric device, comprising the battery device according to any one of claims 1-14, or comprising the energy storage device according to claim 15, or comprising the energy storage system according to claim 16, wherein the battery device, the energy storage device, or the energy storage system is configured for storing or providing electrical energy.

18. A charging network, comprising a charging pile and the energy storage device according to claim 15 or the energy storage system according to claim 16, wherein the energy storage device or the energy storage system is configured for providing electrical energy to the charging pile.
